# FASCICULE DE BREVET EUROPEEN

(11) **EP 3 227 890 B1**
(45) Date de publication et mention de la délivrance du brevet: **07.10.2020**
(21) Numéro de dépôt: 15822961.7
(22) Date de dépôt: 02.12.2015
(51) Int. Cl.: G21B 1/13, B23K 20/02

(54) **COMPOSANT POUR UNE STRUCTURE À GRANDE DIMENSION ADAPTÉ POUR UN RÉACTEUR DE FUSION THERMONUCLÉAIRE, PROCÉDÉ D'ASSEMBLAGE ET RÉACTEUR ASSOCIÉ**
KOMPONENTE FÜR EINE GROSSE STRUKTUR FÜR EINEN THERMONUKLEAREN FUSIONREAKTOR, MONTAGEVERFAHREN UND ZUGEORDNET REAKTOR
COMPONENT FOR A LARGE STRUCTURE ADAPTED FOR A THERMONUCLEAR FUSION REACTOR, ASSEMBLY METHOD AND ASSOCIATED REACTOR

(30) Priorité: 05.12.2014 FR 1402782
(43) Date de publication de la demande: 11.10.2017
(73) Titulaire: Atmostat, 94800 Villejuif (FR)
(72) Inventeur: BUCCI, Philippe, 94815 Villejuif Cedex (FR)
(74) Mandataire: Touroude, Magali Linda
(86) Numéro de dépôt international: PCT/FR2015/000219
(87) Numéro de publication internationale: WO 2016/087726

(56) Documents cités:
- WO-A1-2011/026925
- FR-A1- 2 879 489
- LE MAROIS ET AL.: "HIP technologies for fusion reactor blankets fabrication", FUSION ENGINEERING AND DESIGN, vol. 49-50, novembre 2000 (2000-11), pages 577-583, XP002744922, Netherlands DOI: 10.1016/S0920-3796(00)00286-6
- LE MAROIS ET AL.: "Fusion reactor first wall fabrication techniques", FUSION ENGINEERING AND DESIGN, vol. 61-62, novembre 2002 (2002-11), pages 103-110, XP002744923, Netherlands DOI: 10.1016/S0920-3796(02)00222-3

## Description

La présente invention est relative à un composant d'une structure à grande dimension, ledit composant étant destiné à être soumis à une multiplicité de flux thermiques et/ou un flux de particules de grande énergie pouvant atteindre au moins une fraction ou quelques kilowatts par mètre carré (MW/m²) et à supporter une multiplicité de contraintes mécaniques et/ou thermiques et/ou chimiques.

Elle concerne plus particulièrement un composant d'une paroi d'un réacteur pouvant produire un flux thermique supérieur à quelque mégawatt, notamment une paroi d'un réacteur de fusion nucléaire et/ou thermonucléaire.

Elle concerne également un composant de première paroi pour un réacteur de fusion nucléaire et un procédé économique de fabrication d'un tel composant à géométrie variable.

Elle est également relative à une technique de fabrication d'un composant de première paroi notamment pour un réacteur de fusion nucléaire permettant de réduire le temps d'exposition des différents éléments le constituant après nettoyage afin de limiter la croissance de la couche d'oxyde qui se forme naturellement sur les alliages de cuivre et les aciers inoxydables constituant ledit composant.

Les réacteurs, notamment de fusion thermonucléaire, comprennent généralement une chambre à vide recouverte par des composants de première paroi qui sont directement en regard du plasma. Leur rôle est de protéger du rayonnement thermique et du flux neutronique le personnel travaillant proche dudit réacteur et les installations nucléaires entourant la chambre à vide. C'est pour cette raison que ces chambres doivent être conçues avec des composants ayant une structure et géométrie complexe et des propriétés thermomécaniques, physiques et chimiques spécifiques.

Pour le futur réacteur ITER, la chambre à vide est recouverte par des composants qui sont directement en regard du plasma. Leur rôle est d'évacuer le flux thermique, via un circuit hydraulique. Le cuivre et l'acier constituant lesdits composants sont activement refroidis par de l'eau pressurisée circulant dans des canaux de refroidissement réalisés à l'aide des éléments en acier, notamment en aciers inoxydables. L'assemblage de ces composants peut être réalisé par plusieurs techniques de soudage et leur géométrie complexe ne permet pas leur réalisation par un procédé de fabrication conventionnel, économique et simple. Ainsi, la conception et/ou la fabrication des composants pour ces réacteurs sont coûteuses et il est difficile d'entretenir une production en chaine desdits composants.

Pour diminuer le coût de la fabrication desdits composants, améliorer le comportement mécanique et la résistance aux forts flux thermiques ou à un flux de particules de grande énergie, et permettre une simplicité de fabrication desdits composants en chaine pour un réacteur à géométrie complexe, de nombreuses études ont été réalisées. Cependant, les résultats de ces études sont difficilement exploitables et comparables entre eux, car bien souvent, les maquettes de tests ont des dimensions et des conditions de tenues aux contraintes mécaniques et thermiques et aux forts flux de chaleur peu connues et/ou différentes. De plus, les réacteurs ont souvent des géométries variables. Il est par conséquent difficile d'apprécier l'amélioration apportée par la réalisation des composants décrits dans l'état de la technique.

De la publication WO 2013 017749 est connue un composant de première paroi pour un réacteur de fusion nucléaire muni d'un empilement comprenant successivement un élément en alliage de cuivre, une couche intercalaire métallique et un élément en béryllium directement en contact avec la couche intercalaire métallique, ledit composant étant résistant aux forts flux de chaleur et aux fortes contraintes thermomécaniques. Malheureusement, ledit composant est en une seule pièce, ce qui rend difficile la gestion des risques liés à la fabrication et à la définition d'une géométrie particulière relative au réacteur. De plus, lors de la fabrication dudit composant, si une des parties dudit composant présente un défaut, c'est naturellement tout le composant qui présente ce défaut, ce qui conduit à un surcoût de fabrication. Également, lors de leur assemblage dans le réacteur, il est possible, compte tenu de la complexité de la géométrie des réacteurs, notamment de fusion thermonucléaire, que les risques ne soient pas gérés.Un des problèmes techniques qui se pose lors de l'assemblage d'un tel composant de première paroi pour un réacteur échangeur, notamment un réacteur de fusion thermonucléaire est en ce que le cuivre et l'acier constituant ledit composant s'oxydent facilement lors de l'assemblage d'un tel composant de première paroi d'un réacteur notamment de fusion nucléaire. Un autre problème technique qui se pose lors de l'assemblage d'un tel composant de première paroi pour un réacteur échangeur, notamment un réacteur de fusion thermonucléaire est en ce que la jonction entre les pièces en acier inoxydable et les pièces en cuivre et/ou les jonctions entre les pièces en acier inoxydable et/ou les jonctions entre les pièces en cuivre dudit composant peut présenter un comportement mécanique et un transfert thermique insuffisant dans le domaine d'application des composants de première paroi d'un réacteur de fusion nucléaire.

De la publication FR 2 879 489 (voir Figures) est connue un composant (50) pour un échangeur de chaleur adapté à un de fusion nucléaire, comprenant au moins deux composants (30), où ledit composant (50) est formé par assemblage des composants (30) par diffusion assisté par compression isostatique à chaud. Malheureusement, ce composant (50) est inefficace car il est fortement exposé aux fortes contraintes liées à l'oxydation des matériaux le constituant et ne présente pas un aspect modulaire facilitant sa fabrication en chaine.

Malgré les multiples documents cités ci-dessus constituant l'état de la technique, aucun ces documents ne suggèrent de résoudre par quelque moyen que ce soit, le problème technique objet de la présente invention.

La présente invention vise donc à remédier à ces inconvénients. Plus particulièrement la présente invention vise à proposer un composant de première paroi pour un réacteur de fusion nucléaire et son procédé d'assemblage permettant de réduire le temps d'exposition des différents éléments constituant ledit composant après nettoyage afin de limiter l'oxydation qui se forme naturellement sur les matériaux constituant ledit composant, notamment les alliages de cuivre et les aciers inoxydables remédiant aux problèmes précédemment évoqués pour mieux gérer les risques liés à l'assemblage desdits composants et à leur complexité.

Dans la description qui suit, les termes listés ci-après auront la définition suivante :
- Encapsulation : consiste à enfermer un ou plusieurs éléments dans une capsule. Elle désigne également une couche de protection des composants d'un circuit. Elle consiste principalement à regrouper différents éléments ou modules dans un système modulaire.
- Système modulaire : système constitué par un assemblage de module s'emboitant et placé les uns dans et/ou sur et/ou à côté des autres.
- Assemblage : c'est une liaison mécanique qui évite le déplacement relatif entre plusieurs pièces. Elle permet la transmission des contraintes en supportant différents types et modes de sollicitation en créant des liaisons interatomiques ou intermoléculaires entre au moins deux éléments.
- Assemblage par diffusion : il est caractérisé par un échange d'atomes entre au moins deux éléments. Ce procédé d'assemblage dépend essentiellement de trois paramètres qui sont la température, la pression et le temps.
- Soudage : c'est un moyen d'assemblage permanent assurant la continuité de la matière à assembler.
- Soudage diffusion ou par diffusion : il consiste à se servir du phénomène de diffusion des atomes pour créer une liaison.
- Compaction ou compression isostatique à chaud (CIC ou HIP en anglais) : c'est une forme de traitement thermique qui utilise une pression élevée pour améliorer les propriétés d'un matériau. Cette technique consiste à soumettre un ou plusieurs éléments à l'action simultanée de hautes pressions et températures élevées dans une atmosphère inerte, notamment d'argon.
- Soudage TIG : c'est un procédé de soudage à l'arc avec une électrode non fusible, en présence d'un métal d'apport.
- Rugosité : elle désigne les défauts micro-géométriques de la surface réelle d'un élément.
- Écart moyen arithmétique noté Ra : c'est le critère physique et statistique définissant les défauts de surface micro-géométrique d'un élément par rapport à une ligne moyenne calculée à partir d'un relevé du profil de coupe dudit élément.

L'invention a pour objet un composant C pour une structure de grande dimension adapté pour un réacteur de fusion thermonucléaire, selon la revendication 1.

L'invention concerne également un procédé de fabrication d'un composant C selon la revendication 12 et un réacteur de fusion thermonucléaire selon la revendication 16.

D'autres caractéristiques avantageuses sont divulguées aux revendications dépendantes.

D'autres caractéristiques et avantages de l'invention prises ensemble ou en combinaison apparaitront à la lecture de la description détaillée qui suit pour la compréhension de laquelle on se rapportera aux dessins annexés dans lesquels :
- La figure 1 est une représentation schématique représentant un composant selon l'invention
- La figure 2 est une représentation schématique des différents éléments constituant le composant selon l'invention ;
- La figure 3 est une représentation schématique d'un élément en acier inoxydable muni de canaux hydrauliques selon l'invention ;
- La figure 4a et la figure 4b sont des représentations schématiques représentant un préassemblage d'une partie du circuit hydraulique selon l'invention ;
- La figure 5 est une représentation schématique représentant un préassemblage du circuit élémentaire et la fermeture des moyens de récupération et/ou d'évacuation d'eau selon l'invention ;
- La figure 6 est une représentation schématique représentant l'assemblage des circuits élémentaires dans une fine feuille métallique sans le collecteur central.

La chambre à vide du futur réacteur de fusion thermonucléaire ITER (International Thermonuclear Expérimental Reactor), est recouverte par des composants qui sont directement en regard du plasma. Leur rôle est d'évacuer le flux thermique, via un circuit hydraulique et de protéger du rayonnement thermique et neutronique le personnel travaillant sur le site et les installations entourant le réacteur. L'assemblage de ces composants peut être réalisé par plusieurs techniques parmi lesquelles on peut citer la technique de soudage diffusion assisté par pressage uniaxial ou par compression isostatique à chaud (CIC). Le soudage par diffusion permet de souder l'intégralité des surfaces en contact par l'application simultanée d'une haute pression et d'une haute température. Cette technique de soudage permet d'assembler des matériaux homogènes et/ou hétérogènes. La géométrie complexe de ces composants ne permet pas leur réalisation par un procédé de fabrication conventionnel. Le soudage diffusion assisté par CIC est un procédé essentiel et incontournable, adapté pour l'assemblage des composants de première paroi pour le réacteur ITER, objet de la présente invention.

Pour fabriquer les composants objet de la présente invention, deux cycles de CIC et un traitement thermique sont nécessaires. Le premier cycle de CIC sert à assembler le cuivre et l'acier constituant ledit composant objet de la présente invention et permet de créer une liaison intime entre le circuit de refroidissement et la structure du composant. Le traitement thermique suivi d'une trempe à l'eau ou au gaz permet de remettre en solution les précipités de chrome et zirconium dans l'alliage de cuivre et d'obtenir une solution solide sursaturée qui conférera au cuivre ces propriétés mécaniques au cours du second cycle de CIC. Ce dernier permet également de réaliser la jonction entre le cuivre et les tuiles en matériaux exotiques, notamment le béryllium qui recouvre la surface des panneaux.

Le composant C, selon l'invention, pour une structure de grande dimension notamment pour un réacteur de fusion thermonucléaire, destiné à être soumis à une multiplicité de flux thermiques et/ou un flux de particules de grande énergie, pouvant atteindre quelques centaines de kilowatts par mètre carré ou quelques mégawatts par mètre carré, notamment au moins 100 kilowatts par mètre carré ou au moins 1 mégawatts par mètre carré, et à supporter une multiplicité de contraintes mécaniques et/ou thermiques et/ou chimiques. Parmi les contraintes chimiques, on peut citer l'oxydation due à la mise à l'air des composants et/ou éléments constituant le composant C objet de la présente invention. Pour le projet ITER, le composant C peut supporter des flux thermiques et/ou un flux de particules de grande énergie, pouvant atteindre quelques mégawatts par mètre carré, notamment 5 ou 6 mégawatts par mètre carré.

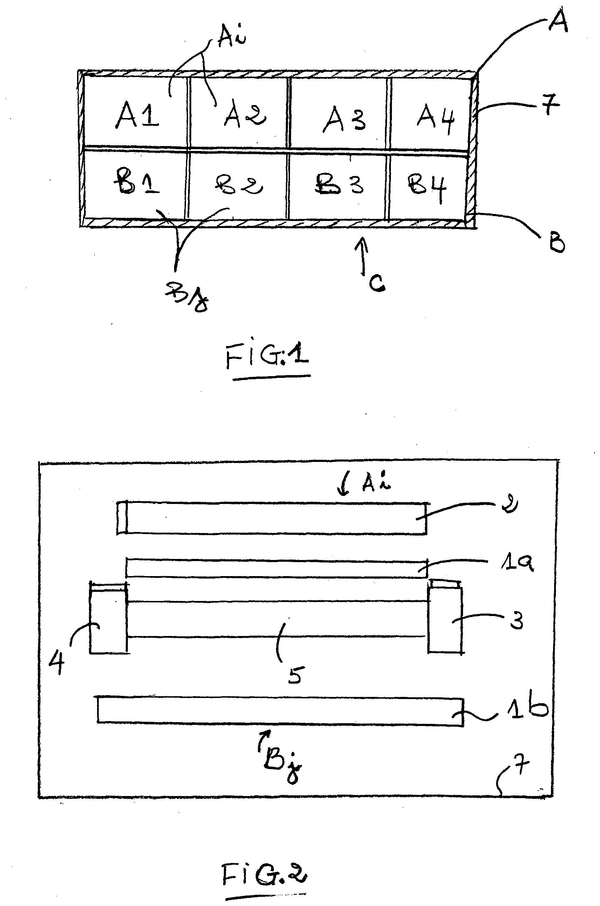

Tel que représenté sur la figure 1, le composant C, comprenant au moins deux composants A et B lesquels comprennent en outre une multiplicité de composants Ai (A1, A2, A3, A4, ...) et/ou Bj (B1, B2, B3, B4, ...), i et j étant un entier naturel, disposés les uns à côté des autres et/ou après les autres et/ou sur les autres. Ledit composant C comprend en outre une fine feuille métallique (7) inerte d'encapsulation, qui permet d'une part d'obturer ledit composant C et d'autre part de réaliser un vide dans ce dernier afin d'éviter l'oxydation des composants le constituant lors de son utilisation ultérieure. Le composant C selon l'invention est formé par l'assemblage par diffusion des composants A et B, notamment par soudage diffusion assisté par compaction ou compression isostatique à chaud (CIC) desdits composants A et B.

La fine feuille métallique (7) inerte constituant le composant C selon l'invention est principalement une tôle en acier, notamment en acier inoxydable, de préférence obtenue par laminage. L'avantage d'utiliser la feuille en acier, notamment acier inoxydable, est en ce qu'elle permet d'assurer la continuité de la matière entre les composants, notamment entre les composants Ai et Bj. Elle permet également de limiter l'oxydation due à l'exposition à l'air.

En référence à la figure 2, le composant C comprend les composants Ai et Bj. Les composants Ai sont parties intégrantes du composant A et les composants Bj sont parties intégrantes du composant B. Les composants Ai et/ou Bj sont constitués des éléments en alliage de cuivre et/ou des éléments en acier inoxydable. Les éléments en cuivre et/ou en acier constituant ce composant Ai et/ou Bj sont activement refroidis par l'eau pressurisée circulant dans au moins un canal de refroidissement réalisé à l'aide des éléments en acier, notamment en acier inoxydable.

L'étape d'assemblage des composants Ai et/ou Bj est une étape importante et délicate dans le procédé de réalisation d'un composant C de première paroi d'un réacteur de fusion comme ITER. Pour garantir un bon transfert thermique, il est nécessaire d'obtenir un soudage de qualité entre le cuivre et l'acier inoxydable constituant les composants Ai et/ou Bj. Pour ce faire, les composants Ai et/ou Bj à assembler sont usinés avec un bon état de surface, avec une rugosité notamment comprise entre Ra = 0,4 et Ra = 3,2. En effet, plus la rugosité est faible plus il sera facile de nettoyer lesdits composants Ai et Bj après usinage. Lesdits composants sont ensuite nettoyés afin d'éliminer toutes traces d'huile de coupe ou de pollutions diverses, mais également pour retirer les couches d'oxydes qui se sont formées sur les surfaces des pièces en acier et en cuivre. Cette notion de rugosité et de nettoyage est une condition nécessaire pour l'assemblage des composants Ai et/ou Bj pour éviter que les jonctions entre l'acier et le cuivre constituant lesdits composants présentent un comportement mécanique et un transfert thermique insuffisant dans le domaine d'application des composants de première paroi d'un réacteur de fusion comme ITER.

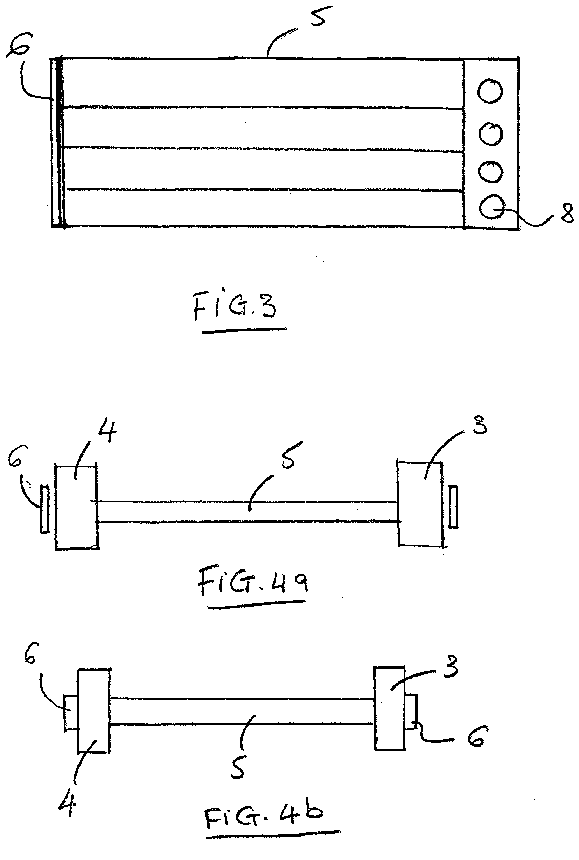

Tel que représenté sur la figure 2, chaque composant Ai comprend au moins des circuits élémentaires composés d'au moins un élément métallique (la), notamment en alliage de cuivre, faisant office de puits de chaleur. Chaque composant Ai comprend en outre au moins des circuits élémentaires composés d'au moins un élément métallique (2), notamment en acier inoxydable, muni de canaux hydrauliques (8) tel que représenté à la figure 3.

Chaque composant Ai comprend également au moins des circuits élémentaires composés d'au moins un circuit hydraulique en métal, notamment en acier inoxydable, constitué d'au moins un moyen externe (3) de récupération et/ou d'évacuation d'eau, d'au moins un moyen interne (4) de récupération et/ou d'évacuation d'eau et d'au moins un mécanisme de communication (5), notamment en acier inoxydable, permettant de relier les éléments constituants lesdits composants Ai.

Chaque composant Bj comprend au moins des circuits élémentaires composés d'au moins un élément (1b) en métal, notamment en alliage de cuivre, faisant office de puits de chaleur.

Dans le cadre d'une fabrication conventionnelle, les composants Ai et Bj constituant le composant C sont usinés, nettoyés puis empilés dans une fine feuille métallique (7) inerte d'encapsulation. Ladite fine feuille métallique est découpée, pliée et soudée par TIG ou laser.

Avantageusement, ladite fine feuille métallique (7) inerte d'encapsulation est une tôle en acier austénitique. Ainsi l'assemblage des composants A et B, notamment des composants Ai et/ou Bj constituant lesdits composants A et/ou B, dans la tôle forme le composant C. Ledit composant C peut également être obtenu par emboutissage ou par un autre procédé d'assemblage.

En référence à la figure 3, les éléments métalliques (2) munis de canaux hydrauliques (8) sont des blocs en acier inoxydable. Pour former une partie des canaux hydrauliques (8) comprenant lesdits éléments métalliques (2), il faut obturer par des couvercles (6) l'une des extrémités dudit bloc en acier inoxydable afin de créer une circulation notamment en forme de U dans le composant Ai, notamment dans ledit composant C.

En référence à la figure 4a et à la figure 4b, Il est également nécessaire de pré-assembler le circuit hydraulique avant de pouvoir insérer tous les composants Ai et/ou Bj dans la fine feuille métallique (7). Pour se faire, les mécanismes de communications (5), notamment en acier inoxydable, sont assemblés par soudage TIG ou laser sur les moyens externes (3) et interne (4) de récupération et/ou d'évacuation d'eau. Après avoir vérifié l'étanchéité de ces soudures par un test à l'hélium, les moyens de récupération et/ou d'évacuation d'eau interne (4) et/ou externe (3) sont obturés à l'aide de couvercles (6). L'étanchéité des soudures est également vérifiée par un test hélium. L'élément métallique (la) est placé sur cet ensemble constitué par les moyens de récupération et/ou d'évacuation externe (3), les moyens de récupération et/ou d'évacuation interne (4) et les mécanismes de communications (5).

Avantageusement, l'élément (la) est une plaque métallique en cuivre.

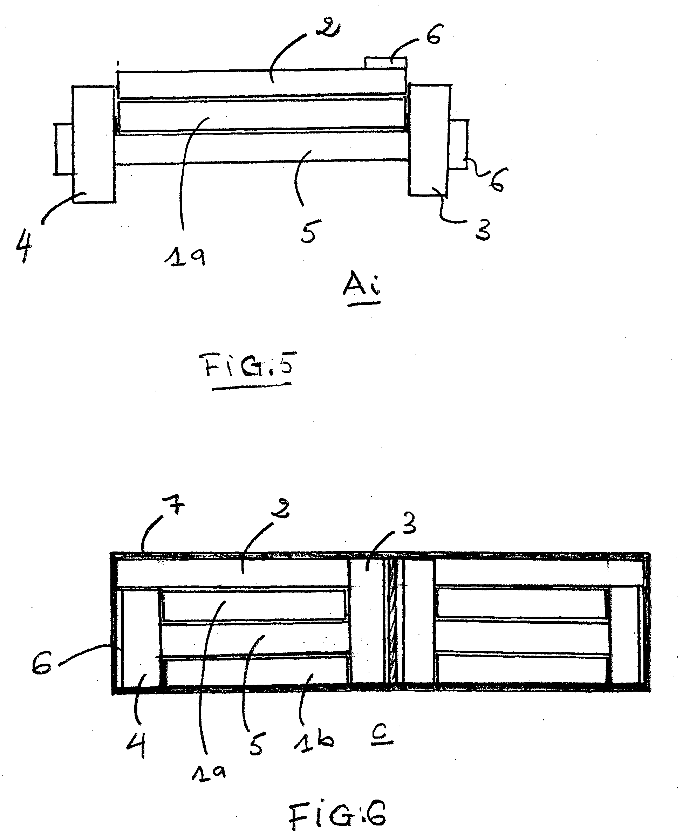

En référence à la figure 5, Le bloc en acier inoxydable (2) est placé sur l'ensemble constitué par les moyens de récupération et/ou d'évacuation externe (3), les moyens de récupération et/ou d'évacuation interne (4), les mécanismes de communications (5) et la plaque de cuivre inférieure (la).

Une soudure est réalisée entre le bloc en acier (2) et les moyens de récupération et/ou d'évacuation externe (3) pour finaliser un circuit hydraulique élémentaire. Chaque circuit hydraulique formé est obturé par soudage d'un couvercle (6).

A chaque étape de soudure et/ou d'assemblable du composant C selon l'invention, un test hélium est réalisé pour vérifier l'étanchéité de la soudure et l'intégrité du circuit hydraulique élémentaire.

Le circuit élémentaire formé constitue un préassemblé du composant C comme le montre la figure 4a et 4b.

Avantageusement, les moyens de récupération et/ou d'évacuation externe (3) et interne sont des boites à eau.

Ainsi est fabriqué par assemblage un nombre nécessaire de circuits élémentaires pour pouvoir assembler un composant C de première paroi d'un réacteur de fusion comme ITER. Lorsqu'un circuit élémentaire est fabriqué, il est testé et stocké sous atmosphère neutre ou sous vide pour éviter toute oxydation possible des surfaces le constituant.

Lorsque le nombre des circuits élémentaires est suffisant, les plaques en cuivre supérieures (1b) et les circuits élémentaires sont placés dans au moins une tôle en acier inoxydable. Enfin, un collecteur central est placé sur l'ensemble ainsi formé et une connexion hydraulique est réalisée entre les circuits élémentaires et le collecteur central par soudage TIG ou laser. Des tests d'étanchéité à l'hélium sont réalisés sur toutes les soudures.

La figure 6 montre l'assemblage des circuits élémentaires dans une fine feuille métallique sans le collecteur central. Avantageusement la fine feuille métallique (7) est munie d'ailes afin d'éloigner au maximum les cordons de soudure de voisinage des pièces en cuivre pour minimiser son oxydation au cours de la réalisation des soudures. Dans la fine feuille métallique ainsi préparée, est inséré des plaques en cuivre supérieures (1b) puis le/les circuits élémentaires composés des composants Ai, notamment la, 2, 3, 4 et 5. La tôle en acier permet d'une part d'obturer le composant C formé et d'autre part de pouvoir réaliser le vide dans ce dernier afin d'éviter l'oxydation des pièces au cours de l'assemblage avec un collecteur central.

Le procédé de fabrication d'un composant C comprend les étapes suivantes :
- Usinage des composants Ai et Bj,
- Empilement desdits composants Ai et Bj, les uns à côté des autres et/ou après les autres et/ou sur les autres,
- encapsulation les composants Ai et Bi dans une fine feuille métallique inerte,
- assembler par soudage diffusion assisté par compaction ou compression isostatique à chaud (CIC ou HIP) les composants A et B dans ladite fine feuille métallique inerte pour former le composant C.

Particulièrement le procédé d'assemblage d'un composant C selon un mode de réalisation de l'invention comprend successivement les étapes suivantes consistant à la formation d'un circuit hydraulique:
- dans un premier temps, on assemble par soudage TIG ou laser les mécanismes de communication (5) sur les moyens de récupération et/ou d'évacuation d'eau interne (4) puis sur les moyens de récupération et/ou d'évacuation d'eau externe (3),
- puis dans un deuxième temps, on obture à l'aide de couvercles (6), les moyens de récupération et/ou d'évacuation d'eau (3) et/ou (4).

Le procédé à deux étapes peut être rallongé ou modifié en incluant un test d'étanchéité. Ce test d'étanchéité peut être réalisé après le procédé de soudage TIG ou laser ou par diffusion des composants Ai et/ou Bj ou des éléments du composant C.

D'autres étapes peuvent être rajoutées au procédé précédemment décrit pour former un composant C. Il s'agit des étapes suivantes :
- on place un élément métallique (la) puis un élément métallique (2),
- on réalise une soudure entre l'élément métallique (2) et un moyen de récupération et/ou d'évacuation d'eau externe (3) pour constituer un circuit hydraulique élémentaire.
- on obture le circuit hydraulique élémentaire formé par le soudage d'un couvercle,
- on place un élément (1b) et le circuit hydraulique élémentaire formé dans une fine feuille métallique inerte d'encapsulation.

D'autres étapes peuvent également être ajoutées au procédé précédemment décrit. Il s'agit de réaliser un test d'étanchéité après chaque soudure et/ou assemblage des éléments constituants le composant C. Ainsi, un réacteur de fusion thermonucléaire qui comprend une chambre à vide recouverte par une couverture comprenant au moins un composant C selon l'invention est fabriqué.

Le dispositif selon l'invention présente l'avantage d'offrir des possibilités de mieux contrôler économiquement les risques d'assemblages des composants C tout en évitant d'exposer les composants le constituant, Ai et Bj ou A et B, notamment les composants en cuivre et en acier, à une oxydation.

Il est avantageux que les composants Ai comprennent au moins des circuits élémentaires composés d'au moins un élément métallique (la), notamment en alliage de cuivre, faisant office de puits de chaleur.

Il est avantageux que, les composants Ai comprennent en outre au moins des circuits élémentaires composés d'au moins un élément métallique (2), notamment en acier inoxydable, muni de canaux hydrauliques.

Il est avantageux que, les composants Ai comprennent au moins des circuits élémentaires composés d'au moins un circuit hydraulique en métal, notamment en acier inoxydable ou en cuivre, constitué d'au moins un moyen externe (3) de récupération et/ou d'évacuation d'eau, d'au moins un moyen interne (4) de récupération et/ou d'évacuation d'eau et d'au moins un mécanisme de communication (5), notamment en acier inoxydable, permettant de relier les éléments constituants lesdits composants Ai.

Il est avantageux que, les composants Bj comprennent au moins des circuits élémentaires composés d'au moins un élément (1b) en métal, notamment en alliage de cuivre, faisant office de puits de chaleur.

Avantageusement, la fine feuille métallique inerte d'encapsulation est une fine feuille en acier, découpée, pliée et soudée par TIG ou laser.

Il est avantageux que, les éléments métalliques (2) selon un mode de réalisation pas revendiqué soient des blocs en acier inoxydable dans lesquels, pour former une partie du canal hydraulique, l'une des extrémités dudit bloc en acier inoxydable est obturée par des couvercles de façon à créer une circulation notamment en forme de U dans ledit composant C.

Il est avantageux que, les mécanismes de communications (5), notamment en acier inoxydable (5), selon l'invention, soient assemblés par soudage TIG ou laser sur les moyens externes (3) de récupération et/ou d'évacuation d'eau et en ce que les moyens de récupération et/ou d'évacuation d'eau interne (4) et/ou externe (3) sont obturés à l'aide de couvercles.

Il est avantageux que le procédé de fabrication d'un composant C comporte des étapes ultérieures selon les revendications 13 et/ou 14.

Selon un autre mode de réalisation de l'invention, le procédé de fabrication d'un composant C comprend en outre une étape dans lequel un test d'étanchéité est réalisé après chaque soudure et/ou assemblage des éléments constituants le composant C.

Avantageusement, le composant C selon l'invention est une composante de la couverture et/ou parois d'un réacteur, notamment de fusion thermonucléaire.

On voit donc qu'il est possible de réaliser de façon industrielle un composant C de première paroi d'un réacteur, notamment de fusion thermonucléaire, fiable capable de supporter des flux thermiques pouvant atteindre quelques kilowatts ou mégawatts par mètre carré, par une technique de fabrication permettant de réduire le temps d'exposition des différents éléments constituant le composant C après nettoyage afin de limiter la croissance de la couche d'oxyde qui se forme naturellement sur les alliages de cuivre et des aciers inoxydables.

Contrairement aux préjugés qui consistaient à croire qu'il est impossible de concevoir un composant pour des réacteurs de fusion pouvant supporter de forts flux thermiques variables et de fort flux de particules de grande énergie avec une technique permettant de réduire le temps d'exposition des différents composants constituant le composant C, l'invention présentée ci-dessus permet de montrer qu'en fabriquant un composant C décrit selon l'invention, il est possible de résoudre le problème objet de la présente invention.

La présente invention n'est nullement limitée aux modes de réalisation décrits et représentés, mais l'homme du métier saura y apporter toute variante conforme. Par exemple, l'invention peut être utilisée pour fabriquer d'autre réacteur non compris dans le domaine de la fusion thermonucléaire ou des hautes énergies.

La portée de l'invention est définie par les revendications.

## Revendications

1. Composant (C) pour une structure de grande dimension, adapté pour un réacteur de fusion thermonucléaire, **caractérisé en ce que** ledit composant (C) comprend au moins un premier composant (A) et un deuxième composant (B), lesquels comprennent en outre une multiplicité de premiers composants (Ai) et/ou de deuxièmes composants (Bj), disposés les uns à côté des autres et/ou après les autres et/ou sur les autres, ledit composant (C) comprenant en outre une fine feuille métallique inerte (7) d'encapsulation permettant d'une part d'obturer ledit composant (C) et d'autre part de réaliser un vide dans ce dernier afin d'éviter l'oxydation des premier et deuxième composants (A,B) le constituant lors de son utilisation ultérieure, et **en ce que** ledit composant (C) étant formé par l'assemblage par soudage diffusion assisté par compaction ou compression isostatique à chaud (CIC ou HIP) desdits premier et deuxième composants (A,B) dans ladite fine feuille métallique inerte.

2. Composant (C) selon la revendication 1 **caractérisé en ce que** la fine feuille métallique inerte est une tôle en acier inoxydable, de préférence obtenue par laminage.

3. Composant (C) selon la revendication 1 ou 2 **caractérisé en ce que** la multiplicité de premiers composants (Ai) comprend des éléments en cuivre et/ou en acier, lesdits éléments étant activement refroidis par l'eau pressurisée circulant dans au moins un canal de refroidissement réalisé à l'aide des éléments en acier inoxydable.

4. Composant (C) selon l'une quelconque des revendications précédentes **caractérisé en ce que** la première et deuxième multiplicité de composants (Ai,Bj) sont usinés avec un état de surface ayant une rugosité comprise entre Ra = 0,4 et Ra = 3,2 permettant de garantir un bon transfert thermique entre les composants de la première et/ou deuxième multiplicité de composants (Ai,Bj) et de faciliter leur nettoyage après usinage.

5. Composant (C) selon l'une quelconque des revendications précédentes **caractérisé en ce que** les composants de la première multiplicité de composants (Ai) comprennent au moins des circuits élémentaires composés d'au moins un premier élémént métallique (1a) en alliage de cuivre, faisant office de puits de chaleur.

6. Composant (C) selon l'une quelconque des revendications précédentes **caractérisé en ce que** les composants de la première multiplicité de composants (Ai) comprennent en outre au moins des circuits élémentaires composés d'au moins un deuxième élément métallique (2) en acier inoxydable, muni de canaux hydrauliques.

7. Composant (C) selon l'une quelconque des revendications précédentes **caractérisé en ce que** les composants de la première multiplicité de composants (Ai) comprennent au moins des circuits élémentaires composés d'au moins un circuit hydraulique en acier inoxydable ou en cuivre, constitué d'au moins un moyen externe (3) de récupération et/ou d'évacuation d'eau, d'au moins un moyen interne (4) de récupération et/ou d'évacuation d'eau et d'au moins un mécanisme de communication (5), en acier inoxydable, permettant de relier les éléments constituants lesdits composants de la première multiplicité de composants (Ai).

8. Composant (C) selon l'une quelconque des revendications précédentes **caractérisé en ce que** les composants de la deuxième multiplicité de composants (Bj) comprennent au moins des circuits élémentaires composés d'au moins un troisième élément (1b) en alliage de cuivre, faisant office de puits de chaleur.

9. Composant (C) selon l'une quelconque des revendications précédentes **caractérisé en ce que** la fine feuille métallique inerte d'encapsulation est une fine feuille en acier, découpée, pliée et soudée par TIG ou laser.

10. Composant (C) selon l'une quelconque des revendications 6 à 9 **caractérisé en ce que** les éléments métalliques (2) sont des blocs en acier inoxydable dans lesquels pour former une partie du canal hydraulique, l'une des extrémités dudit bloc en acier inoxydable est obturée par des couvercles de façon à créer une circulation en forme de U dans ledit composant (C).

11. Composant (C) selon l'une quelconque des revendications 7 à 10 **caractérisé en ce que** les mécanismes de communications (5), en acier inoxydable (5), sont assemblés par soudage TIG ou laser sur les moyens externes (3) de récupération et/ou d'évacuation d'eau et **en ce que** les moyens de récupération et/ou d'évacuation d'eau interne (4) et/ou externe (3) sont obturés à l'aide de couvercles.

12. Procédé de fabrication d'un composant (C) selon l'une quelconque des revendications précédentes dans lequel les étapes suivantes sont satisfaites :
- Usinage de la première et deuxième multiplicité de composants (Ai,Bj),
- disposer les premier et deuxième composant (A,B), lesquelles comprennent la première et/ou deuxième multiplicité de composants (Ai,Bj), les uns à côté des autres et/ou après les autres et/ou sur les autres,
- encapsuler les premier et deuxième composant (A,B) par une fine feuille métallique inerte,
- assembler par soudage diffusion assisté par compaction ou compression isostatique à chaud (CIC ou HIP) les premier et deuxième composant (A,B) dans ladite fine feuille métallique inerte.

13. Procédé de fabrication d'un composant (C) selon la revendication 12 dans lequel les étapes suivantes sont satisfaites :
- assembler par soudage TIG ou laser les mécanismes de communication (5) sur les moyens de récupération et/ou d'évacuation d'eau internes (4) puis sur les moyens de récupération et/ou d'évacuation d'eau externes (3),
- puis obturer à l'aide de couvercles, les moyens de récupération et/ou d'évacuation d'eau.

14. Procédé de fabrication d'un composant (C) selon la revendication 13 dans lequel les étapes suivantes sont satisfaites, dans l'étape de disposer
- placer un premier élément métallique (la) sur un mécanisme de communication (5),
- placer un deuxième élément métallique (2) sur le premier élément métallique (1a),
- réaliser une soudure entre le deuxième élément métallique (2) et un moyen de récupération et/ou d'évacuation d'eau externe (3) pour constituer un circuit hydraulique élémentaire.
- obturer le circuit hydraulique élémentaire formé par le soudage d'un couvercle (6),
- placer un troisième élément métallique (1b) et le circuit hydraulique élémentaire formé dans la fine feuille métallique inerte (7) d'encapsulation.

15. Procédé de fabrication d'un composant (C) selon la revendication 14 dans lequel, un test d'étanchéité est réalisé après chaque soudure et/ou assemblage des éléments constituants le composant (C).

16. Réacteur de fusion thermonucléaire comprenant une chambre à vide recouverte par une couverture comprenant au moins un composant (C) selon l'une quelconque des revendications de 1 à 11.

## Patentansprüche

1. Komponente (C) für eine groß dimensionierte Struktur, die für einen thermonuklearen Fusionsreaktor geeignet ist, **dadurch gekennzeichnet, dass** die Komponente (C) mindestens eine erste Komponente (A) und eine zweite Komponente (B) umfasst, die ferner mehrere erste Komponenten (Ai) und/oder zweite Komponenten (Bj) umfassen, die nebeneinander und/oder nacheinander und/oder aufeinander angeordnet sind, wobei die Komponente (C) ferner eine dünne inerte Einkapselungsmetallfolie (7) umfasst, die es einerseits ermöglicht, die Komponente (C) zu schließen, und andererseits ein Vakuum in letzterer zu erzeugen, um eine Oxidation der ersten und zweiten Komponente (A, B), aus denen sie besteht, während ihrer nachfolgenden Verwendung zu verhindern, und **dadurch gekennzeichnet, dass** die Komponente (C) durch Zusammenbau durch Diffusionsschweißen gebildet wird, unterstützt durch Verdichten oder heißisostatisches Pressen (CIC oder HIP) der ersten und zweiten Komponente (A, B) in der dünnen inerten Metallfolie.

2. Komponente (C) nach Anspruch 1, **dadurch gekennzeichnet, dass** die dünne inerte Metallfolie ein Edelstahlblech ist, das vorzugsweise durch Walzen erhalten wird.

3. Komponente (C) nach Anspruch 1 oder 2, **dadurch gekennzeichnet, dass** die mehreren ersten Komponenten (Ai) Elemente aus Kupfer und/oder Stahl umfassen, wobei die Elemente durch das in mindestens einem Kühlkanal zirkulierende Druckwasser aktiv gekühlt werden, wobei der Kühlkanal mit Edelstahlelementen ausgeführt ist.

4. Komponente (C) nach einem der vorhergehenden Ansprüche, **dadurch gekennzeichnet, dass** die mehreren ersten und zweiten Komponenten (Ai, Bj) mit einer Oberflächenbeschaffenheit mit einer Rauheit zwischen Ra = 0,4 und Ra = 3,2 bearbeitet werden, was es ermöglicht, eine gute Wärmeübertragung zwischen den Bauteilen der mehreren ersten und/oder zweiten Bauteilen (Ai, Bj) zu gewährleisten und deren Reinigung nach der Bearbeitung zu erleichtern.

5. Komponente (C) nach einem der vorhergehenden Ansprüche, **dadurch gekennzeichnet, dass** die Komponenten der mehreren ersten Komponenten (Ai) mindestens Grundkreise umfassen, die aus mindestens einem ersten metallischen Element (1a) aus einer Kupferlegierung zusammengesetzt sind und als Wärmesenke dienen.

6. Komponente (C) nach einem der vorhergehenden Ansprüche, **dadurch gekennzeichnet, dass** die Komponenten der mehreren ersten Komponenten (Ai) ferner mindestens Grundkreise umfassen, die aus mindestens einem zweiten Metallelement (2) aus Edelstahl bestehen, das mit Hydraulikkanälen versehen ist.

7. Komponente (C) nach einem der vorhergehenden Ansprüche, **dadurch gekennzeichnet, dass** die Komponenten der mehreren ersten Komponenten (Ai) mindestens Grundkreise umfassen, die aus mindestens einem Hydraulikkreis aus Edelstahl oder Kupfer bestehen, bestehend aus mindestens einem externen Mittel (3) zum Rückgewinnen und/oder Ablassen von Wasser, mindestens einem internen Mittel (4) zum Rückgewinnen und/oder Ablassen von Wasser und mindestens einem Kommunikationsmechanismus (5) aus Edelstahl, der es ermöglicht, die Bestandteile der Komponenten der mehreren ersten Komponenten (Ai) zu verbinden.

8. Komponente (C) nach einem der vorhergehenden Ansprüche, **dadurch gekennzeichnet, dass** die Komponenten der mehreren zweiten Komponenten (Bj) mindestens Grundkreise umfassen, die aus mindestens einem dritten Element (1b) aus Kupferlegierung bestehen, das als Wärmesenke dient.

9. Komponente (C) nach einem der vorhergehenden Ansprüche, **dadurch gekennzeichnet, dass** die dünne inerte Einkapselungsmetallfolie eine dünne Stahlfolie ist, die durch WIG oder Laser geschnitten, gefaltet und geschweißt wird.

10. Komponente (C) nach einem der Ansprüche 6 bis 9, **dadurch gekennzeichnet, dass** die Metallelemente (2) Blöcke aus Edelstahl sind, in denen, um einen Teil des Hydraulikkanals zu bilden, eines der Enden des Blocks aus Edelstahl durch Abdeckungen verschlossen wird, um eine U-förmige Zirkulation in der Komponente (C) zu erzeugen.

11. Komponente (C) nach einem der Ansprüche 7 bis 10, **dadurch gekennzeichnet, dass** die Kommunikationsmechanismen (5) aus Edelstahl (5) durch WIG- oder Laserschweißen an den externen Mitteln (3) zum Rückgewinnen und/oder Ablassen von Wasser montiert sind, und **dadurch gekennzeichnet, dass** die internen (4) und/oder externen Mittel (3) zum Rückgewinnen und/oder Ablassen von Wasser mit Abdeckungen verschlossen sind.

12. Verfahren zur Herstellung einer Komponente (C) nach einem der vorhergehenden Ansprüche, bei dem die folgenden Schritte erfüllt sind:
- Bearbeiten der mehreren ersten und zweiten Komponenten (Ai, Bj),
- Anordnen der ersten und zweiten Komponente (A, B), die die mehreren ersten und/oder zweiten Komponenten (Ai, Bj) umfassen, nebeneinander und/oder nacheinander und/oder aufeinander,
- Einkapseln der ersten und zweiten Komponente (A, B) durch eine dünne inerte Metallfolie,
- Montieren, durch Diffusionsschweißen, unterstützt durch Verdichten oder heißisostatisches Pressen (CIC oder HIP), der ersten und zweiten Komponente (A, B) in der dünnen inerten Metallfolie.

13. Verfahren zur Herstellung einer Komponente (C) nach Anspruch 12, wobei die folgenden Schritte erfüllt sind:
- Montieren, durch WIG- oder Laserschweißen, der Kommunikationsmechanismen (5) an den internen Mitteln (4) zum Rückgewinnen und/oder Ablassen von Wasser und dann an den externen Mitteln (3) zum Rückgewinnen und/oder Ablassen von Wasser,
- anschließend Verschließen der Mittel zum Rückgewinnen und/oder Ablassen von Wasser mit Deckeln.

14. Verfahren zur Herstellung einer Komponente (C) nach Anspruch 13, wobei die folgenden Schritte erfüllt sind: im Schritt des Anordnens
- Platzieren eines ersten metallischen Elements (1a) auf einem Kommunikationsmechanismus (5),
- Platzieren eines zweiten Metallelements (2) auf dem ersten Metallelement (1a),
- Ausführen einer Schweißung zwischen dem zweiten Metallelement (2) und einem externen Mittel (3) zum Rückgewinnen und/oder Ablassen von Wasser, um einen hydraulischen Grundkreislauf zu bilden,
- Verschließen des hydraulischen Grundkreises, was durch Schweißen eines Deckels (6) gebildet wird,
- Platzieren eines dritten Metallelements (1b) und des hydraulischen Grundkreises, der in der dünnen inerten Einkapselungsmetallfolie (7) ausgebildet ist.

15. Verfahren zur Herstellung einer Komponente (C) nach Anspruch 14, bei dem nach jedem Schweißen und/oder jeder Montage der Elemente, aus denen die Komponente (C) besteht, eine Dichtheitsprüfung durchgeführt wird.

16. Thermonuklearer Fusionsreaktor, umfassend eine Vakuumkammer, die von einer Abdeckung bedeckt ist, die mindestens eine Komponente (C) nach einem der Ansprüche 1 bis 11 umfasst.

## Claims

1. Component (C) for a large structure, which component is suitable for a thermonuclear fusion reactor, **characterized in that** said component (C) comprises at least one first component (A) and one second component (B), which components further comprise a plurality of first components (Ai) and/or second components (Bj) and are arranged one beside the other and/or one after the other and/or one on top of the other, said component (C) further comprising a thin inert metal encapsulating foil (7) for sealing said component (C) and for creating a vacuum in said component in order to prevent oxidation of the first and the second component (A, B) constituting said component during its subsequent use, and **in that** said component (C) is formed by joining, by means of diffusion welding assisted by hot isostatic compaction or pressing (HIP), said first and second component (A, B) in said thin inert metal foil.

2. Component (C) according to claim 1, **characterized in that** the thin inert metal foil is a stainless steel sheet, preferably obtained by rolling.

3. Component (C) according to either claim 1 or claim 2, **characterized in that** the plurality of first components (Ai) comprises elements made of copper and/or steel, said elements being actively cooled by pressurized water flowing in at least one cooling channel produced using stainless steel elements.

4. Component (C) according to any of the preceding claims, **characterized in that** the first and the second plurality of components (Ai, Bj) are machined so as to have a surface finish having a roughness of between Ra = 0.4 and Ra = 3.2 to ensure good heat transfer between the components of the first and/or the second plurality of components (Ai, Bj) and to facilitate the cleaning of said components after machining.

5. Component (C) according to any of the preceding claims, **characterized in that** the components of the first plurality of components (Ai) comprise at least basic circuits consisting of at least one first metal element which is made of copper alloy and acts as a heat sink.

6. Component (C) according to any of the preceding claims, **characterized in that** the components of the first plurality of components (Ai) further comprise at least basic circuits consisting of at least one second metal element (2) which is made of stainless steel and is provided with hydraulic channels.

7. Component (C) according to any of the preceding claims, **characterized in that** the components of the first plurality of components (Ai) comprise at least basic circuits consisting of at least one hydraulic circuit which is made of stainless steel or copper and is made up of at least one external water recovery and/or water discharge means (3), at least one internal water recovery and/or water discharge means (4) and at least one communication mechanism (5) that is made of stainless steel and is intended for connecting the elements constituting said components of the first plurality of components (Ai).

8. Component (C) according to any of the preceding claims, **characterized in that** the components of the second plurality of components (Bj) comprise at least basic circuits consisting of at least one third element (1b) which is made of copper alloy and acts as a heat sink.

9. Component (C) according to any of the preceding claims, **characterized in that** the thin inert metal encapsulating foil is a thin steel foil that is cut, folded and welded by means of TIG or laser welding.

10. Component (C) according to any of claims 6 to 9, **characterized in that** the metal elements (2) are stainless steel blocks in which, in order to form part of the hydraulic channel, one of the ends of said stainless steel block is sealed by covers so as to create a U-shaped flow in said component (C).

11. Component (C) according to any of claims 7 to 10 **characterized in that** the communication mechanisms (5), which are made of stainless steel (5), are joined, by means of TIG or laser welding, to the external water recovery and/or water discharge means (3), and **in that** the internal water recovery and/or water discharge means (4) and/or the external water recovery and/or water discharge means (3) are sealed using covers.

12. Method for manufacturing a component (C) according to any of the preceding claims,
wherein the following steps are satisfied:
- machining the first and the second plurality of components (Ai, Bj);
- arranging the first and the second component (A, B), which comprise the first and/or the second plurality of components (Ai, Bj), one beside the other and/or one after the other and/or one on top of the other;
- encapsulating the first and the second component (A, B) by a thin inert metal foil;
- joining, by means of diffusion welding assisted by hot isostatic compaction or pressing (HIP), the first and the second component (A, B) in said thin inert metal foil.

13. Method for manufacturing a component (C) according to claim 12, wherein the following steps are satisfied:
- joining, by means of TIG or laser welding, the communication mechanisms (5) to the internal water recovery and/or water discharge means (4), then to the external water recovery and/or water discharge means (3);
- subsequently sealing, using covers, the water recovery and/or water discharge means.

14. Method for manufacturing a component (C) according to claim 13, wherein the following steps are satisfied, in the arranging step:
- placing a first metal element (1a) on a communication mechanism (5);
- placing a second metal element (2) on the first metal element (1a);
- producing a weld between the second metal element (2) and an external water recovery and/or water discharge means (3) to form a basic hydraulic circuit;
- sealing the formed basic hydraulic circuit by welding a cover (6);
- placing a third metal element (1b) and the formed basic hydraulic circuit in the thin inert metal encapsulating foil (7).

15. Method for manufacturing a component (C) according to claim 14, wherein a leak test is carried out after each weld and/or joining of the elements constituting the component (C).

16. Thermonuclear fusion reactor comprising a vacuum chamber covered by a cover, the reactor comprising at least one component (C) according to any of claims 1 to 11.
